# EUROPEAN PATENT APPLICATION

(11) **EP 2 868 800 A1**
(43) Date of publication of application: **06.05.2015**
(21) Application number: 14162810.7
(22) Date of filing: 31.03.2014
(51) Int. Cl.: D06P 5/13

(54) **Method for decolorization of a dyed polyester fiber**

(30) Priority: 04.09.2013 TW 102131809
(71) Applicant: Far Eastern New Century Corporation, Taipei City 10602 (TW)
(72) Inventor: Liu, Pang-Chin, Taoyuan Hsien 320 (TW); Cheng, Hsin-Ling, Taipei City 10602 (TW); Wang, Cheng-Ting, Taipei City 10602 (TW)
(74) Representative: Lord, Hilton David

(57) **Abstract**

A method for decolorization of a dyed polyester fiber (3) includes: providing a dyed polyester fiber (3) stained with a dye, and a solvent (2) capable of dissolving the dye and that is disposed in a solvent pool, the dyed polyester fiber (3) being disposed separately from the solvent pool; heating the solvent (2) to produce a fresh vapor of the solvent (2), the temperature of the fresh vapor ranging between the glass transition temperature and the melting point of the polyester fiber; condensing the fresh vapor to form a condensed fluid of the solvent (2); contacting the dyed polyester fiber (3) with the condensed fluid of the solvent (2) which is outside the solvent pool and which has a temperature sufficient to dissolve the dye such that the dye is extracted from the dyed polyester fiber (3) so as to form a dye-containing solution and a decolorized polyester fiber; and separating the dye-containing solution from the decolorized polyester fiber.

## Description

This invention relates to a method for decolorization, more particularly to a method for decolorization of a dyed polyester fiber.

Nowadays, waste recycling has become an important issue in daily life and a business opportunity in industry due to the impact of environmental awareness. Currently, the global annual yield of polyester products is about 60 million tons, in which about 30 percent of the total polyester products are polyester bottles. A recovery system has been implemented to recover the polyester bottles. However, for polyester fibers, which are utilized in many polyester products, a good recovery system has yet to be established.

In the recovery system for the polyester fibers, removal of a dye in the polyester fibers is a very important issue. If the dye cannot be removed completely, the polyester fibers cannot be efficiently purified and recovered in the subsequent recovery processes. Therefore, how to establish an effective dye-removing process is material to the recovery of the polyester fibers.

Methods for removing dyes from fabrics or textiles have been proposed. For example, U.S. Patent No. 5,356,437 discloses a process for removing excess dye from a newly manufactured printed or dyed fabric or yarn using an enzyme exhibiting peroxidase or oxidase activity. U.S. Patent No. 5, 613, 983 discloses a method for decolorizing or fading fabrics with gaseous oxidizing agents, such as ozone.

U.S. Patent No. 7,192,988 discloses a process for removing colorants from colored polyester. The method includes adding glycol (e.g., ethylene glycol) to depolymerize the colored polyester to form a monomer under a temperature ranging from 180°C to 280°C, followed by using activated carbon under a high temperature (at least 170 °C) to remove some solvent and then an extraction solvent such as water, alcohol, or glycol, to remove the remaining colorants.

U.S. Patent No. 7,959,807 discloses a method for recovering useful components from dyed polyester fiber. This method includes a dye extraction step in which a solvent is used to immerse the dyed polyester fiber so that the dye can be extracted from the dyed polyester fiber.

In U.S. Patent Nos. 7,192,988 and 7,959,807, since the polyester is immersed in the solvent, there is a back-staining problem when the solution containing the solvent and the dye reaches the saturated concentration. Therefore, multiple extractions are required and a significant amount of the solvent must be consumed, thereby resulting in negative influence on the environment.

Accordingly, reducing the amount of the solvent used in the extraction method has become an important issue in order to satisfy environmental considerations.

Hence, there is a need in the art to provide a method for decolorization of a dyed polyester fiber that is more eco-friendly.

Therefore, the object of the present invention is to provide a method for decolorization of a dyed polyester fiber that can overcome at least one of the aforesaid drawbacks of the prior art.

According to this invention, a method for decolorization of a dyed polyester fiber comprises the following steps:
(a) providing a dyed polyester fiber stained with a dye, and a solvent that is capable of dissolving the dye and that is disposed in a solvent pool, the dyed polyester fiber (3) being disposed separately from the solvent pool;
(b) heating the solvent to produce a fresh vapor of the solvent, the temperature of the fresh vapor ranging between the glass transition temperature and the melting point temperature of the polyester fiber;
(c) condensing the fresh vapor to form a condensed fluid of the solvent;
(d) contacting the dyed polyester fiber with the condensed fluid of the solvent which is outside the solvent pool and which has a temperature sufficient to dissolve the dye such that the dye is extracted from the dyed polyester fiber so as to form a dye-containing solution and a decolorized polyester fiber; and
(e) separating the dye-containing solution from the decolorized polyester fiber.

Other features and advantages of the present invention will become apparent in the following detailed description of the preferred embodiments of this invention, with reference to the accompanying drawing, in which:

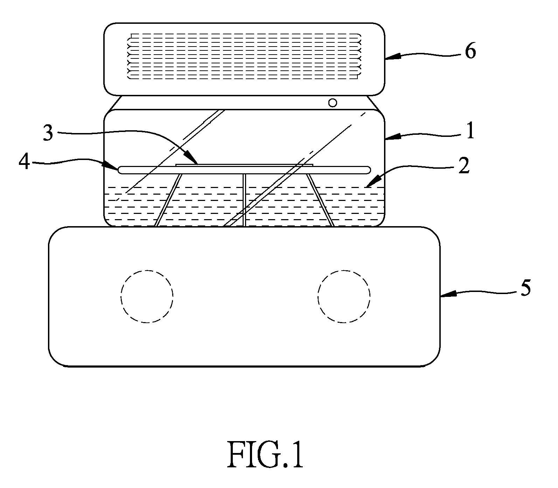

Fig. 1 is a schematic view showing the preferred embodiment of a method for decolorization of a dyed polyester fiber according to this invention that is conducted in a decolorization apparatus.

According to the preferred embodiment of this invention, a method for decolorization of a dyed polyester fiber comprises the following steps:
(a) providing a dyed polyester fiber stained with a dye, and a solvent that is capable of dissolving the dye and that is disposed in a solvent pool, the dyed polyester fiber (3) being disposed separately from the solvent pool;
(b) heating the solvent to produce a fresh vapor of the solvent, the temperature of the fresh vapor ranging between the glass transition temperature and the melting point temperature of the polyester fiber;
(c) condensing the fresh vapor to form a condensed fluid of the solvent;
(d) contacting the dyed polyester fiber with the condensed fluid of the solvent which is outside the solvent pool and which has a temperature sufficient to dissolve the dye such that the dye is extracted from the dyed polyester fiber so as to form a dye-containing solution and a decolorized polyester fiber; and
(e) separating the dye-containing solution from the decolorized polyester fiber.

In step (a), the polyester fiber is, for example but not limited to, polyethylene terephthalate (PET, glass transition temperature: 69°C∼82°C, meltingpoint: 250°C∼265 °C), polybutylene terephthalate (PBT, glass transition temperature: 80°C, meltingpoint: 225°C), polytrimethylene terephthalate (PTT, glass transition temperature: 60°C, melting point: 223°C ), polycyclohexylenedimethylene terephthalate (PCT, glass transition temperature: 90°C, melting point: 295°C), or polyethylene naphthalate (PEN, glass transition temperature: 117°C, melting point: 337 °C). Preferably, the polyester fiber is polyethylene terephthalate (PET). The dye is one suitable for dyeing the polyester fiber, and is, for example but not limited to, a disperse dye, a cationic dye, or a fluorescent brightener. Preferably, the dye is a disperse dye, such as Brown XF, Red XF, or Blue XF (commercially available from Chung Fu Dyestuffs Co., Ltd.).

In this embodiment, the dyed polyester fiber can further include an additive agent, such as but not limited to, a processing aid.

In step (a), the solvent is disposed to be separated from the dyed polyester fiber, and preferably has a solubility parameter that ranges from 17 to 40(J/cm³)^{0.5}. Preferably, the solvent is selected from the group consisting of p-xylene (boilingpoint:138.3°C, solubility parameter: 17.93(J/cm³)^{0.5}), m-xylene (boiling point: 139 °C, solubility parameter: 17.93(J/cm³)^{0.5}), o-xylene (boiling point: 144 °C, solubility parameter: 17. 93 (J/cm³)^{0.5}) , 1-hexanol (boiling point: 158 ° C, solubility parameter: 21.68(J/cm³)^{0.5}), ethylene glycol (boiling point: 197 °C, solubility parameter: 34.09(J/cm³)^{0.5}), diethylene glycol (boiling point: 230 °C, solubility parameter: 27.09(J/cm³)^{0.5}), 1,3-propanediol (boiling point: 217 ° C, solubility parameter: 27.40 (J/cm³) ^{0.5}), 1,4-butanediol (boiling point: 230 °C, solubility parameter: 22.31(J/cm³)^{0.5}), dimethylformamide (boiling point: 153 °C, solubility parameter: 24.74(J/cm³)^{0.5}), dimethylacetamide (boiling point: 166 ° C, solubility parameter: 22.0 (J/cm³)^{0.5}), dimethyl sulfoxide (boiling point: 189°C, solubility parameter: 24.54(J/cm³)^{0.5}), ethylene carbonate (boiling point: 248 °C, solubility parameter: 30.06(J/cm³)^{0.5}), propylene carbonate (boiling point: 242°C, solubility parameter: 27.19(J/cm³)^{0.5}), 1,2-butylene carbonate (boiling point: 251 °C, solubility parameter: 24.74 (J/cm³)^{0.5}), and combinations thereof. The boiling points listed above are measured under atmospheric pressure. More preferably, the solvent is selected from the group consisting of ethylene glycol, xylene, 1-hexanol, 1,3-propanediol, ethylene carbonate, and combinations thereof.

In step (b), the fresh vapor disclosed herein represents a pure vapor of the solvent without impurities. The temperature of the fresh vapor is the same as the boiling point of the solvent. If the boiling point of the solvent under atmospheric pressure is lower than the glass transition temperature of the polyester fiber, the boiling point can be increased by increasing the operating pressure such that the boiling point of the solvent ranges between the glass transition temperature and the melting point of the polyester fiber. In contrast, if the boiling point of the solvent under atmospheric pressure is higher than the glass transition temperature of the polyester fiber, the boiling point can be decreased by decreasing the operating pressure such that the boiling point of the solvent ranges between the glass transition temperature and the melting point of the polyester fiber. The way to change the operating pressure is not specifically limited in this invention and a skilled artisan can readily change the operating pressure using a well known technique.

In the present invention, the solvent is disposed in a solvent pool and is heated by a heating device to produce the fresh vapor of the solvent. The heating device is not specifically limited in this invention. The dyed polyester fiber and the solvent pool can be disposed in a tank or in different tanks. The tank(s) should be capable of preventing the fresh vapor of the solvent from escaping and should be capable of withstanding the boiling point of the solvent. In this embodiment, the dyed polyester fiber and the solvent pool are disposed in the same tank, and the dyed polyester fiber is separately disposed above the solvent pool, e.g., the dyed polyester fiber can be disposed on a metal grid that is separately disposed above the solvent pool. Alternatively, if the dyed polyester fiber and the solvent pool are disposed in different tanks, the fresh vapor of the solvent produced by the heating device can be fed into the tank in which the dyed polyester fiber is disposed using pipes.

In steps (c) and (d), preferably, the temperature of the condensed fluid of the solvent ranges between the glass transition temperature and the melting point of the polyester fiber. If the temperature of the condensed fluid is higher than the melting point of the polyester fiber, the polyester fiber will be undesirably melted in step (d) . In contrast, if the temperature of the condensed fluid is lower than the glass transition temperature of the polyester fiber, the condensed fluid is unlikely to efficiently extract the dye from the dyed polyester fiber in step (d). Preferably, the temperature of the condensed fluid ranges from 130°C to 220°C, more preferably, the temperature of the condensed fluid ranges from 140°C to 190°C. The temperature of the condensed fluid can be measured using an infrared detector. The distance between the dyed polyester fiber and the heating device can be adjusted to control the temperature of the condensed fluid and the temperature of the polyester fiber. The temperature of the condensed fluid can be increased by shortening the distance between the polyester fiber and the heating device. In contrast, the temperature of the condensed fluid can be decreased by increasing the distance between the polyester fiber and the heating device.

In step (d), the dyed polyester fiber contacts the condensed fluid at a position outside the solvent pool. When the fresh vapor is in contact with the polyester fiber, molecules of the polyester fiber will conduct a molecular motion due to the high temperature of the fresh vapor, and the polyester fiber starts to swell so as to improve the extraction efficiency in step (d) . It should be noted that the fresh vapor can be directly condensed on the dyed polyester fiber. Alternatively, the fresh vapor can be condensed on an inner surface of the tank where the dyed polyester fiber is disposed and the condensed fluid of the solvent is then dropped onto the dyed polyester fiber to extract the dye from the dyed polyester fiber.

In this embodiment, preferably, the weight ratio of the dyed polyester fiber to the condensed fluid is from 1:1.5 to 1:4. More preferably, the weight ratio of the dyed polyester fiber to the condensed fluid is from 1:1.6 to 1:2.6. The weight of the condensed fluid adsorbed in the dyed polyester fiber is determined by subtracting the original weight of the dyed polyester fiber, i.e., the weight of the dyed polyester fiber before contacting the condensed fluid, from the weight of the dyed polyester fiber saturated with the condensed fluid. The dyed polyester fiber saturated with the condensed fluid indicates that the dyed polyester fiber fully adsorbs the condensed fluid and the dye-containing solution starts to drop from the dyed polyester fiber.

In step (e), the dye-containing solution is separated from the decolorized polyester fiber and is delivered to the solvent pool.

The dye-containing solution can be separated from the decolorized polyester fiber through any solid-liquid separation process, for example but not limited to, gravity, filtration using a pressure filter or nitrogen gas, vacuum suction filtration, or centrifugation. When the dyed polyester fiber is disposed above the solvent, the dye-containing solution can fall into the solvent pool from the decolorized polyester fiber by gravity. The solvent in the dye-containing solution can be reused to produce the fresh vapor of the solvent. It should be noted that when the solvent in the dye-containing solution is vaporized, the dye in the dye-containing solution remains in the solvent pool and will not be taken back to the decolorized polyester fiber, thereby preventing the back-staining problem.

It is noted that steps (a) to (e) can be repeated until the dyed polyester fiber reaches the desired decolorizing quality.

Fig. 1 shows the method of the preferred embodiment conducted in a decolorization apparatus. The apparatus includes a tank 1, a metal grid 4 that is disposed in the tank 1, a heating device 5 that is disposed below the tank 1, and a condensing device 6 that is disposed above the tank 1. A solvent 2 is disposed in a solvent pool in the tank 1, and a dyed polyester fiber 3 is disposed on the metal grid 4 and is not in contact with the solvent 2.

When the solvent 2 is heated by the heating device 5 to its boiling point, a fresh vapor of the solvent 2 is produced. Some of the fresh vapor would directly contact the dyed polyester fiber 3 and be condensed on the dyed polyester fiber 3. Some of the fresh vapor would be condensed on an inner surface of the tank 1. The condensed fluid of the solvent 2 condensed on the dyed polyester fiber 3 or dripped onto the dyed polyester fiber 3 from the inner surface of the tank 1 would cause the dyed polyester fiber 3 to swell and start extraction of a dye from the dyed polyester fiber 3 so as to form a dye-containing solution and a decolorized polyester fiber. When the decolorized polyester fiber is saturated with the dye-containing solution, the dye-containing solution starts to drop from the decolorized polyester fiber to the solvent pool by gravity. The solvent 2 in the dye-containing solution can be reused to produce the fresh vapor of the solvent 2.

### Examples

### Chemicals

1. Brown XF: a disperse dye with brown color, purchased from Chung Fu Dyestuffs Co., Ltd.
2. Red XF: a disperse dye with dark red color, purchased from Chung Fu Dyestuffs Co., Ltd.
3. Blue XF: a disperse dye with dark blue color, purchased from Chung Fu Dyestuffs Co., Ltd.
4. Xylene: 99.9% purity, purchased from J.T. Barker.
5. Ethylene glycol: purchased from Oriental Union Chemical Corporation (OUCC).
6. 1-hexanol: 99% purity, purchased from Alfa Aesar.
7. 1, 3-propanediol: 98% purity, purchased from Merck Schuchardt OHG.
8. Ethylene carbonate: purchased from Oriental Union Chemical Corporation (OUCC).
9. Acetone: purchased from Uni-onward Corp.

### Example 1 (E1)

1.5 grams of a dyed polyester fiber (100% of PET polyester fiber stained with Brown XF, area of 10×10cm², glass transition temperature: 69°C, melting point: 250° C) was provided.

A heating device was disposed below a 1 liter glass tank, and a condensing device was disposed above the tank. 150 grams of xylene solvent was disposed in the tank. A metal grid was disposed in the tank. The dyed polyester fiber was disposed on the metal grid such that the dyed polyester fiber was separated from the solvent by a distance.

Xylene in the tank was heated using the heating device to its boiling point (140°C) so that xylene fresh vapor was produced. The temperature of the xylene fresh vapor was also 140°C (the boiling point of xylene). The fresh vapor was then condensed on the dyed polyester fiber to decolorize the dyed polyester fiber for an hour under atmospheric pressure. After an hour, the decolorized polyester fiber was then disposed in deionized water at 25°C to remove the solvent and the dye-containing solution on the decolorized polyester fiber, followed by drying under 100°C. The detailed information for Example 1 is listed in Table 1.

### Examples 2 to 7 (E2 to E7)

The method for decolorizing the dyed polyester fiber in each of Examples 2 to 7 was similar to that of Example 1. The difference resides in the types of the solvent and/or the dye. The detailed information for Examples 2 to 7 is listed in Table 1.

### Comparative Example 1 (CE1)

The polyester fiber used in Comparative Example 1 was a non-dyed white polyester fiber.

### Comparative Examples 2 and 3 (CE2 and CE3)

The procedure in each of Comparative Examples 2 and 3 was similar to that of Example 1 except that the dyed polyester fiber was directly immersed into the solvent, rather than disposed on the metal grid to be separated from the solvent. The detailed information for Comparative Examples 2 and 3 is listed in Table 1.

### Comparative Examples 4 and 5 (CE4 and CE5)

The procedure in each of Comparative Examples 4 and 5 was similar to that of Example 1 except for the type of the solvent. In Comparative Example 4, deionized water was used as the solvent (boiling point: 100°C, solubility parameter to the dye: 47.84 (J/cm³) ^{0.5}), while in Comparative Example 5, acetone was used as the solvent (boiling point: 56.5°C, solubility parameter to the dye: 20.25(J/cm³)^{0.5}). The detailed information for Comparative Examples 4 and 5 is listed in Table 1.

### Examples 8 to 10 (E8 to E10)

The procedure in each of Examples 8 to 10 was similar to that of Example 2, except that, in Examples 8 to 10, the temperature of the condensed fluid was controlled to be 190°C, 160°C, and 140°C, respectively, by adjusting the distance between the dyed polyester fiber and the heating device. The detailed information for Examples 8 to 10 is listed in Table 1.

### Comparative Examples 6 (CE6)

The procedure in Comparative Example 6 is similar to that of Example 2, except for the temperature of the condensed fluid.

**Table 1**

| | Dye Type | Polyester fiber | | Solvent | | Fresh Vapor Temp. (°C) | Condensed fluid Temp. (°C) | Color measurement result | | | |
|---|---|---|---|---|---|---|---|---|---|---|---|
| | | color | Weight | Type | Amount | | | | L | a | b |
| E1 | Brown XF | Brown | 1.5 gram | Xylene | 150 gram | 140 | 135 | Before | 34.6 | 19.1 | 11.2 |
| | | | | | | | | After | 83.5 | -0.51 | 3.5 |
| E2 | Brown XF | Brown | 1.5 gram | Ethylene glycol | 150 gram | 197 | 190 | Before | 34.6 | 19.1 | 11.2 |
| | | | | | | | | After | 84.3 | -0.12 | 3.5 |
| E3 | Blue XF | Dark Blue | 1.5 gram | Ethylene glycol | 150 gram | 197 | 190 | Before | 20.6 | 3.0 | 18.0 |
| | | | | | | | | After | 80.4 | -1.8 | 2.14 |
| E4 | Red XF | Dark Red | 1.5 gram | Ethylene glycol | 150 gram | 197 | 190 | Before | 23.6 | 23.6 | 6.1 |
| | | | | | | | | After | 75.9 | -0.16 | 2.8 |
| E5 | Brown XF | Brown | 1.5 gram | 1-hexanol | 150 gram | 158 | 145 | Before | 34.6 | 19.1 | 11.2 |
| | | | | | | | | After | 83.77 | -0.15 | 2.9 |
| E6 | Brown XF | Brown | 1.5 gram | 1,3-propane diol | 150 gram | 217 | 215 | Before | 34.6 | 19.1 | 11.2 |
| | | | | | | | | After | 77.31 | -0.14 | 3.7 |
| E7 | Brown XF | Brown | 1.5 gram | Ethylene carbonate | 150 gram | 248 | 220 | Before | 34.6 | 19.1 | 11.2 |
| | | | | | | | | After | 84.4 | -0.37 | 4.4 |
| CE1 | - | White | 1.5 gram | gram - | | - | - | - | 81.3 | -0.43 | 0.12 |
| CE2 | Brown XF | Brown | 1.5 gram | Xylene | 150 gram | 140 | 140 | Before | 34.6 | 19.1 | 11.2 |
| | | | | | | | | After | 71.8 | 8.3 | 17.0 |
| CE3 | Brown XF | Brown | 1.5 gram | Ethylene glycol | 150 gram | 197 | 196 | Before | 34.6 | 19.1 | 11.2 |
| | | | | | | | | After | 72.2 | 4.2 | 14.1 |
| CE4 | Brown XF | Brown | 1.5 gram | Deionized water | 150 gram | 100 | 100 | Before | 34.6 | 19.1 | 11.2 |
| | | | | | | | | After | 34.6 | 19.1 | 11.2 |
| CE5 | Brown XF | Brown | 1.5 gram | Acetone | 150 gram | 60 | 55 | Before | 34.6 | 19.1 | 11.2 |
| | | | | | | | | After | 34.6 | 19.1 | 11.2 |

| | | | | | | | | | | | |
|---|---|---|---|---|---|---|---|---|---|---|---|
| Note: "-" represents "none". | | | | | | | | | | | |

### Results

### Color Determination

Colors of the polyester fiber before and after the decolorization treatment in each of Examples 1 to 7 and Comparative Examples 1 to 5 were determined by a color difference meter (NIPPON DENSHOKU, NE4000) using L a b color specification system (JIS Z 8729). When the color of the polyester fiber is close to white, the L value is greater than 75 and the b value is less than 10. More preferably, the b value is less than 8, and even more preferably, the b value is less than 4. The results in Examples 1 to 10 and Comparative Examples 1 to 6 are listed in Table 2. Weight ratio of the dyed polyester fiber to the condensed fluid

The weight of the condensed fluid used to decolorizing the dyed polyester fiber was measured by the following steps:
measuring the weight of the dyed polyester fiber before decolorization treatment (hereinafter referred to as "original weight");
   when the dyed polyester fiber was saturated with the condensed fluid and the dye-containing solution started to drop from the dyed polyester fiber, measuring the weight of the dyed polyester fiber (hereinafter referred to as "saturated weight"); and
calculating the weight of the condensed fluid by subtracting "original weight" from "saturated weight".

The results are listed in Table 3.

**Table 2**

| | | | E8 | E9 | E10 | CE6 |
|---|---|---|---|---|---|---|
| Temp. of the condensed fluid (°C) | | | 190°C | 160°C | 140°C | 50°C |
| Color measurement result | Before | L | 34.6 | 34.6 | 34.6 | |
| | | a | 19.1 | 19.1 | 19.1 | |
| | | b | 11.2 | 11.2 | 11.2 | |
| | 10 min | L | 35.6 | 36.2 | 34.6 | |
| | | a | 16.8 | 20.5 | 19.1 | |
| | | b | 10.9 | 12.1 | 11.2 | |
| | 20 min | L | 48.2 | 47.0 | 36.9 | |
| | | a | 8.0 | 14.6 | 17.5 | |
| | | b | 21.6 | 10.6 | 8.9 | |
| | 30 min | L | 71.7 | 56.7 | 49.5 | 34.6 |
| | | a | -5.1 | 1.4 | 15.4 | 19.1 |
| | | b | 11.8 | 22.9 | 18.6 | 11.2 |
| | 40 min | L | 80.2 | 69.4 | 57.2 | |
| | | a | -0.42 | -9.0 | 2.1 | |
| | | b | 5.4 | 10.3 | 17.1 | |
| | 50 min | L | 84.0 | 82.2 | 79.6 | |
| | | a | 0.52 | 0.92 | -5.7 | |
| | | b | 6.1 | 5.5 | 10.1 | |
| | 60 min | L | 84.3 | 85.4 | 84.1 | |
| | | a | -0.21 | -0.33 | 0.80 | |
| | | b | 3.5 | 5.3 | 7.9 | |

**Table 3**

| | Original weight (g) | Saturated weight (g) | Condensed fluid weight (g) | Weight ratio |
|---|---|---|---|---|
| E1 | 1.50 | 4.05 | 2.55 | 1:1.70 |
| E2 | 1.50 | 4.97 | 3.47 | 1:2.31 |
| E3 | 1.51 | 4.79 | 3.28 | 1:2.17 |
| E4 | 1.50 | 4.80 | 3.30 | 1:2.20 |
| E5 | 1.50 | 4.02 | 2.52 | 1:1.68 |
| E6 | 1.51 | 4.39 | 2.88 | 1:1.91 |
| E7 | 1.50 | 5.36 | 3.86 | 1:2.57 |

Table 1 shows that, compared to Examples 1 and 2, Comparative Examples 2 and 3 cannot efficiently decolorize the dyed polyester fiber by the immersion extraction method.

To be specific, in Comparative Examples 2 and 3, after the immersion extraction for an hour, the L value did not reach the value of 75, and the a value and b value were not close to zero. It could be inferred that the immersion extraction has back-staining shortcoming. Examples 1 and 2 show a good efficiency for decolorization, and the L value for each of two examples (83.5 and 84.3) is even higher than the non-dyed white polyester fiber in Comparative Example 1 (81.3).

Examples 2 to 4 show that the method of the present invention can efficiently remove the different types of the dye from the dyed polyester fiber.

The difference between Examples 5, 6, 7 and Comparative Examples 4,5 is the type of the solvent. The solvent used in Comparative Example 4, i.e., water, has the solubility parameter to the dye greater than 40 (J/ cm³)^{0.5}), and thus could not well dissolve the dye in the dyed polyester fiber. From Comparative Example 5, it is indicated that the condensed fluid of acetone having a temperature lower than the glass transition temperature of the polyester fiber provides an inferior extracting effect. In each of Examples 5 to 7, the condensed fluid having a temperature ranging between the glass transition temperature and the melting point of the polyester fiber exhibits good decolorizing effect for the dyed polyester fiber.

The difference between Examples 8 to 10 and Comparative Example 6 is the condensed fluid temperature. The condensed fluid temperature in Comparative Example 6 was only 50 °C so that the dyedpolyester fiber could not be decolorized. The condensed fluid temperature was controlled to be between 140°C to 190°C in each of Examples 8 to 10 so that the dyed polyester fiber could be efficiently decolorized.

Moreover, Table 2 further shows that in Examples 8 to 10, the higher the condensed fluid temperature was, the higher the increase rate of the L value was at the beginning of the decolorizing method. However, after about an hour, the results for decolorization were similar.

As shown in Tables 1 and 3, Comparative Examples 2 and 3 in Table 1 show that the weight ratio of the dyed polyester fiber to the solvent used in immersion extraction was 1:100. However, Table 3 shows that the weight ratio of the dyed polyester fiber to the condensed fluid used for extracting the dye in Examples 1 to 7 was from 1:1.5 to 1:4. Moreover, in U.S. Patent No. 7, 959, 807, the weight ratio of the solvent to the dyed polyester fiber is greater than 4. The results indicate that the method of the present invention may use less amount of the solvent to achieve decolorizing effect.

To sum up, the decolorizing method of the present invention could be suitable for extracting a variety of dyes from the dyed polyester fiber, and the solvent in the dye-containing solution may be recycled so that the amount of the solvent can be significantly reduced as compared to the conventional immersion extraction method.

## Claims

1. A method for decolorization of a dyed polyester fiber (3), **characterized by** the steps of:
(a) providing a dyed polyester fiber (3) stained with a dye, and a solvent (2) that is capable of dissolving the dye and that is disposed in a solvent pool, the dyed polyester fiber (3) being disposed separately from the solvent pool;
(b) heating the solvent (2) to produce a fresh vapor of the solvent (2), the temperature of the fresh vapor ranging between the glass transition temperature and the melting point temperature of the polyester fiber;
(c) condensing the fresh vapor to form a condensed fluid of the solvent (2);
(d) contacting the dyed polyester fiber (3) with the condensed fluid of the solvent (2) which is outside the solvent pool and which has a temperature sufficient to dissolve the dye such that the dye is extracted from the dyed polyester fiber (3) so as to form a dye-containing solution and a decolorized polyester fiber; and
(e) separating the dye-containing solution from the decolorized polyester fiber.

2. The method as claimed in claim 1, **characterized in that** the solubility parameter of the solvent (2) is from 17 to 40(J/cm³)^{0.5}.

3. The method as claimed in claims 1 or 2, **characterized in that** the solvent (2) is selected from the group consisting of xylene, 1-hexanol, ethylene glycol, diethylene glycol, 1,3-propanediol, 1,4-butanediol, dimethylformamide, dimethylacetamide, dimethyl sulfoxide, ethylene carbonate, propylene carbonate, butylene carbonate, and combinations thereof.

4. The method as claimed in claim 3, **characterized in that** xylene includes p-xylene, m-xylene, or o-xylene.

5. The method as claimed in any one of the previous claims, **characterized in that** the temperature of the condensed fluid of the solvent (2) in step (d) ranges between the glass transition temperature and the melting point temperature of the polyester fiber.

6. The method as claimed in any one of the previous claims, **characterized in that** the weight ratio of the polyester fiber to the condensed fluid is from 1:1.5 to 1:4.

7. The method as claimed in claim 6, **characterized in that** the weight ratio of the polyester fiber to the condensed fluid is from 1:1.6 to 1:2.6.

8. The method as claimed in any one of the previous claims, **characterized in that** the dye is a disperse dye.

9. The method as claimed in any one of the previous claims, **characterized in that** the dyed polyester fiber (3) is separately disposed above the solvent (2), the fresh vapor of the solvent (2) contacting and being condensed on the polyester fiber.

10. The method as claimed in any one of the previous claims, **characterized in that**, in step (a), the solvent (2) is disposed in a solventpool, and in step (e), the dye-containing solution drops from the decolorized polyester fiber into the solvent pool by gravity.

11. The method as claimed in any one of the previous claims, further **characterized by** a step (f) of repeating the steps of step (a) to step (e).

12. The method as claimed in claim 11, **characterized in that** the method is proceeded in a tank (1) that includes a condensing device (6).
